Europäisches Patentamt

European Patent Office

Office européen des brevets

(11) Publication number: **0 218 289**
**A1**

# EUROPEAN PATENT APPLICATION

(21) Application number: 86201595.5

(22) Date of filing: 16.09.86

(51) Int. Cl.4: **C02F 3/12** , **C02F 3/30** ,
**C02F 3/16**

(30) Priority: 16.09.85 NL 8502522

(43) Date of publication of application:
15.04.87 Bulletin 87/16

(84) Designated Contracting States:
CH DE FR GB IT LI NL

(71) Applicant: DHV Raadgevend
Ingenieursbureau BV
Laan 1914 nr. 35
NL-3818 EX Amersfoort(NL)

(72) Inventor: ten Hove, Dirk
Roevoeterstraat 1/a
NL-3829 MR Hooglanderveen(NL)

(74) Representative: de Vries, Johannes Hendrik
Fokke et al
Octroolbureau Los en Stigter B.V. P.O. Box
20062
NL-1000 HB Amsterdam(NL)

(54) **Method and installation for the purification of liquid, in particular waste water, according to the activated sludge method.**

(57) In a method and installation for the purification of waste water according to the activated sludge method an aeration unit (42) is moved permanently in a horizontal path through a water reservoir (46). The aeration unit (42) operates continuously and brings the water in the reservoir into turbulence. Means (39) are provided for horizontally limiting the zone of turbulence in the water generated by the aeration unit (42), such that always in some part of the reservoir the sludge has been fully settled. In the reservoir nitrification, denitrification and settling can take place simultaneously.

fig.17

## Method and installation for the purification of liquid, in particular waste water, according to the activated sludge method.

### FIELD OF THE INVENTION

The invention relates to a method and installation for the purification of liquid, in particular waste water, according to the activated sludge method. More in particular it relates to a method wherein liquid to be purified is supplied to a reservoir and treated liquid is discharged from said reservoir, while oxygen is added to the liquid in the reservoir by an aeration unit.

### DESCRIPTION OF THE PRIOR ART

US patent specification No. 3,320,160 discloses a method for the purification of waste water according to the activated sludge method, wherein in a part of a reservoir liquid is aerated by means of a plurality of reciprocating aerators, while a further part of the reservoir serves as sludge settling area, where purified water is discharged.

This method has the disadvantage that in the part of the reservoir, where the aeration is effected the sludge concentration is diminishing rather quickly, whereby the purification efficiency decreases. Moreover, in the part of the reservoir where the sludge settles special measurements have to be taken to prevent the settled sludge from coagulating together, in which case this part of the reservoir would become silted up.

In another known method according to US patent specification No. 3,965,009 there is used an installation having two reservoirs, communicating with one another, wherein alternately one reservoir is utilized as aeration area, while the sludge settles in the second reservoir. In the reservoir used for aerating the liquid is completely brought into turbulence and is mixed with sludge.

This is disadvantageously in that after moving the aerator from one reservoir to the other aerating cannot be effected again directly after, since in that case there would be suspended sludge in the liquid in both reservoirs, and it would not be possible to discharge cleared water.

Further it is a disadvantage, that during aerating the sludge concentration in the respective reservoir decreases gradually. This requires a continuous adjustment of the energy output of the aerator, since with a lower sludge concentration less energy input is required to maintain the oxygen introduction efficiency at the same level. This impedes the operational handling.

A further problem in this method is, that only two processes can take place simultaneously, that is nitrification and settling. Nitrification, e.g. oxidizing nitrogen compounds to nitrate is effected in the entire reservoir which is aerated by the aerator, whereby the liquid obtains a high oxygen concentration required for nitrification. Settling of the sludge takes place in the other reservoir, the liquid therein being calmed down and the oxygen concentration thereof being zero.

However, dentrification, which is favourable for reducing the energy consumption of the purification process cannot be realised. Said denitrification is the process of regenerating oxygen by transforming the nitrate mentioned hereinabove into nitrogen. For this purpose the oxygen concentration in the liquid needs to be low (0.5 -0.2 mg $O_2$/l), and the active sludge has to be contacted thoroughly with the wastage (in particular the nitrate), which requires a certain degree of turbulence in the liquid. Such condition is not constantly present in any of the reservoirs, so that it is not possible to effectuate a permanent denitrification.

### SUMMARY OF THE INVENTION

It is among the objects of the present invention to provide a method and installation for purification of waste water according to the activated sludge method, wherein a continuous operation can be effected.

Another object is to provide a method and installation, wherein the aeration can be effected with a constant sludge concentration.

Still another object of the invention is to provide a method and installation, wherein the coagulation of sludge is prevented in a simple and effective manner.

A further object of the present invention is to provide a method and installation, wherein nitrification, settling and denitrification can be effected simultaneously.

According to the invention these objects are attained by a method, wherein liquid to be purified is supplied to a reservoir and purified liquid is discharged from said reservoir, oxygen is added to the liquid in the reservoir by an aeration unit, while the liquid is also brought into turbulence, the aeration unit operating continuously while it is moved permanently in a substantially horizontal path through the reservoir, and purified liquid is discharged from the reservoir at a place remote from the aeration unit where the sludge has been settled.

According to the invention the installation for the purification of liquid, in particular waste water is characterized by a reservoir for the purification of the liquid; a supply for supplying liquid to be purified to the reservoir; an aeration unit for aerating the liquid in the reservoir and for bringing this liquid into turbulence, the aeration unit in action, being continuously in operation and moving permanently in a substantially horizontal path; means for horizontally limiting the zone of turbulence in the liquid generated by the aeration unit, in such way that always in some part of the reservoir the sludge has been fully settled during operation; a discharge means for discharging purified liquid from the reservoir, the discharge means being constructed and arranged such that purified liquid is discharged from the reservoir at a place remote from the aeration unit where the sludge has been settled.

Preferably the supply for liquid to be purified comprises a plurality of supply pipes connected to the reservoir and debouching at spaced positions along the path of the aeration unit, the supply pipes being closeable in dependence of the position of the aeration unit.

As a result thereof it is possible to supply liquid to be purified in the neighbourhood of the aeration unit at all time, yet as an alternative liquid to be treated may be supplied to liquid in the reservoir which is turbulent but poor in oxygen, in order to promote denitrification in the liquid.

In a preferred embodiment of the installation according to the invention the means for horizontally limiting the zone of turbulence in the liquid generated by the aeration unit comprise baffle plates crossing the path of the aerating unit, the baffle plates having passage for the aeration unit.

Herein the baffle plates may be constructed as partition walls dividing the reservoir into a number of compartments which communicate with one another.

If the aeration unit moves in an endless path it is advantageously when the compartments are arranged around a central section of the reservoir, the partition walls extending between the central section and the outer side of the reservoir.

In case the aeration unit comprises at least one surface aerator, the means for horizontally limiting the zone of turbulence in the liquid generated by the aeration unit may consist of a rigid cap disposed over the aerator, the cap having a downwardly directed circumferential side wall terminating below the liquid surface during operation, a gas inlet opening being provided in the cap.

As an alternative or additionally the aeration unit may comprise at least one pair of aerators generating opposite flows.

In this way the zone of turbulence in the liquid generated by the aeration unit will also be limited.

BRIEF DESCRIPTION OF THE DRAWINGS

The invention will hereafter be elucidated with reference to the drawings, which very - schematically show several embodiments of the installation for the purification of liquid, in particular waste water, according to the invention by way of example.

Fig. 1 is a schematic plan view of a first embodiment of the installation for the purification of liquid, in particular waste water, according to the invention.

Fig. 2 is a longtitudinal section of the installation of fig. 1.

Fig. 3 is a transverse section of the installation of fig. 1.

Fig. 4 is a schematic plan view of a second embodiment of the installation for the purification of liquid, in particular waste water, according to the invention.

Fig. 5 is a longtitudinal section of the installation of fig. 4.

Fig. 6 is a transverse section of the installation of fig. 4.

Fig. 7 is a schematic plan view of a third embodiment of the installation for the purification of liquid, in particular waste water, according to the invention.

Fig. 8 is a section along the line VIII-VIII in fig. 7.

Fig. 9 is a section along the line IX-IX in fig. 7.

Fig. 10 is a transverse section of the installation of fig. 7.

Fig. 11 is an enlarged schematic plan view of an aeration unit for use in an installation for purification of liquid, in particular waste water, according to the invention.

Fig. 12 is a transverse section of the aeration unit of fig. 11.

Fig. 13 is a schematic plan view of a fourth embodiment of the installation for the purification of liquid, in particular waste water, according to the invention.

Fig. 14 is a section along the line XIV-XIV in fig. 13.

Fig. 15 is a schematic plan view of a fifth embodiment of the installation for the purification of liquid, in particular waste water, according to the invention.

Fig. 16 is a section along the line XVI-XVI in fig. 15.

Fig. 17 is a schematic plan view of a sixth embodiment of the installation for the purification of liquid, in particular waste water, according to the invention.

Fig. 18 is a section along the line XVIII-XVIII in fig. 17.

Fig. 19 is an enlarged section along the line XIX-XIX in fig. 17, wherein the transverse section of the overflow channel is illustrated.

DESCRIPTION OF THE PREFERRED EMBODIMENTS

In the several embodiments corresponding parts are indicated with the same reference numerals.

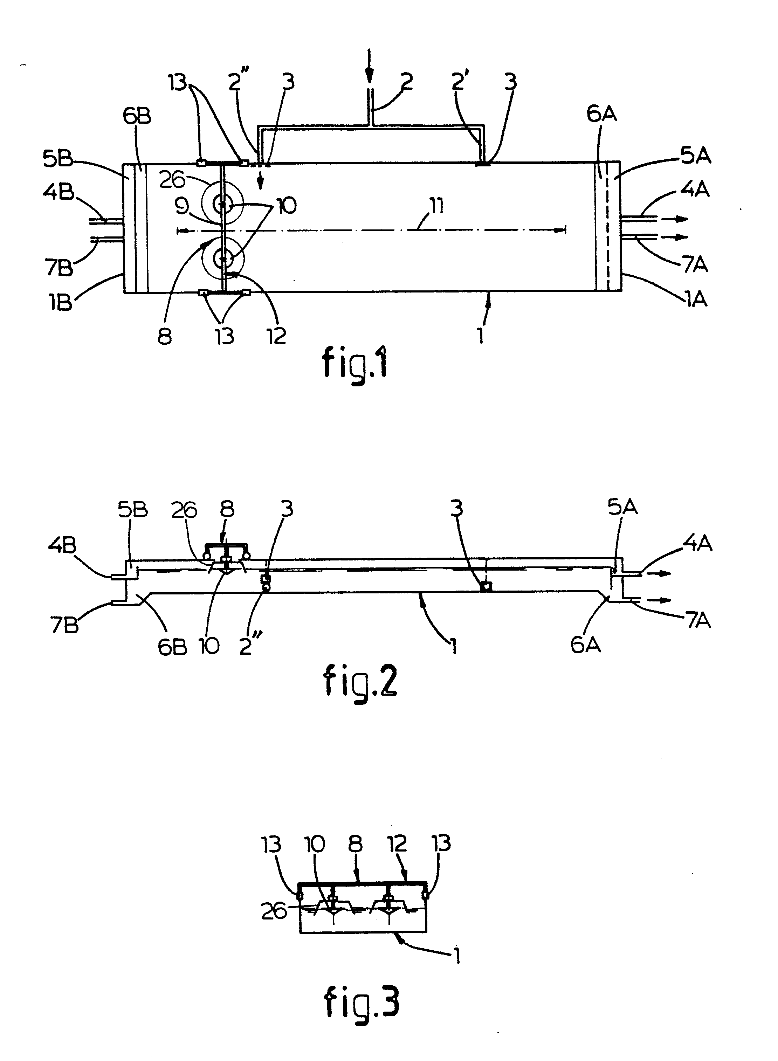

Fig. 1, 2 and 3 show a first embodiment of an installation, which is used in particular for the purification of waste water according to the activated sludge method.

This installation comprises an open reservoir 1, which, in plan view, has an elongated rectangular configuration. A supply pipe 2 serves for supplying waste water to the reservoir 1, the supply pipe 2 dividing into pipes 2' and 2", which connect to the reservoir in longtitudinally spaced relationship and each thereof is constructed to be closed by a slide valve 3.

A discharge pipe 4A, 4B respectively is arranged at each end 1A, 1B respectively of the reservoir 1, the discharge pipes connectting to an adjustable overflow means 5A, 5B respectively, with which the discharge of the purified liquid can be controlled. Near each end 1A, 1B of the reservoir 1 a recess 6A, 6B respectively is formed, and near the bottom thereof a sludge discharge pipe 7A, 7B respectively for discharging settled excess sludge connects.

An aeration unit 8, consisting of two surface aerators 10 connected to each other by a transverse bar, is substantially horizontally movable in a reciprocating manner along the length of the reservoir 1 as indicated with the broken line 11. For this purpose the aeration unit 8 is mounted to a frame 12, which is transportable over the longtitudinal edges of the reservoir 1 with rolls 13 by means of a driving means (not shown).

It has to be understood that also other common aerators may be used instead of surface aerators 10, and the aeration unit 8 may include any number of aerators. A cap 26 which will be described in detail hereinafter is disposed over each aerator 10.

The use and operation of the installation is as follows:

In the position of the aeration unit 8 illustrated in fig. 1 and 2 the slide valve 3 of the supply pipe 2" is open, so that waste water flows into the reservoir 1 in the neighbourhood of the aeration unit 8. Consequently the inflowing waste water is directly mixed with the water in the reservoir and contacted with the sludge, since the aeration unit 8 brings the surrounding water into turbulence.

In the position illustrated the overflow means 5B at the end 1B of the reservoir 1 lying in the neighbourhood of the aeration unit is closed. The overflow means 5A at the end 1A of the reservoir 1 which is remote from the aeration unit 8, however, is open to let water drain off through the discharge pipe 4A. This outflowing water will be free from sludge as the water in the reservoir 1 which is remote from the aeration unit 8 has been calmed down, whereby the sludge in that part of the reservoir 1 settles and the water near the surface thereof where it is discharged will not contain any sludge. In this way the reservoir 1 serves not only as purification area for the waste water, but also as settling area for the sludge, so that clarifiers can be omitted. A further advantage is that the sludge is not discharged from the reservoir together with the water, so that a recycling device for the sludge can be left out. As a result thereof a substantial saving of energy can be obtained. At the sludge discharge 7A excess sludge collected in the recess 6A may be discharged.

When the aeration unit 8 is moved again to the opposite end 1A of the reservoir 1 the overflow means 5B is gradually lowered if the aeration unit has reached a certain position and the sludge near the overflow has been settled in a sufficient way. Simultaneously the overflow means 5A is gradually closed. Further the slide valve 3 of the supply pipe 2" is being closed and the slide valve 3 of the supply pipe 2' is being opened. Hereby the part of the reservoir 1 near the end 1A will serve as aeration area, while the sludge will settle in the area near the end 1B. The reciprocating movement of the aeration unit may be repeated interminably.

In the way described before the processes which are important for an efficient purification, e.g. nitrification, denitrification and settling can take place simultaneously. Nitrification can be effected below and in the direct surroundings of the aeration unit, denitrification occurs in the adjacent area where turbulence is still present yet the oxygen concentration has been eased to approximately zero, while settling takes place in areas still further away from the aeration unit, where the waste water has been calmed down.

In order to promote the above-mentioned denitrification it is possible not to supply raw waste water near the aeration unit but to supply waste water to the reservoir at places where the water is stull turbulent, yet poor in oxygen.

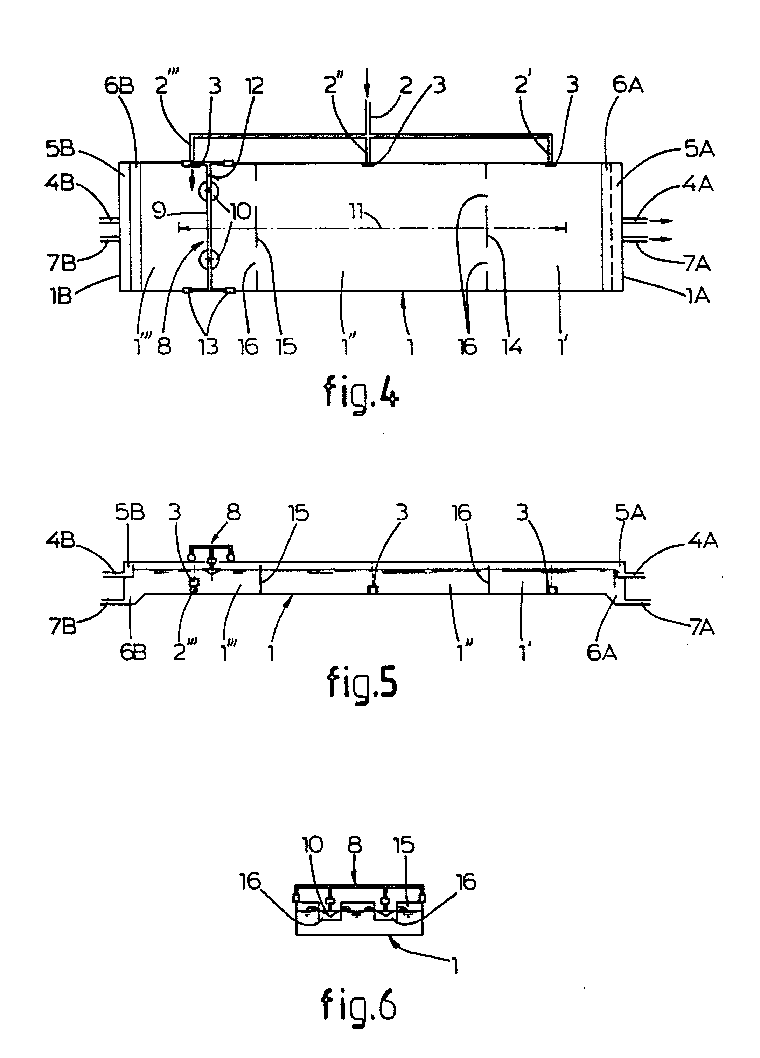

Fig. 4, 5 and 6 show a second embodiment of the installation, wherein two transverse partition walls 14, 15 respectively are arranged in the reservoir 1 to divide the reservoir into three compartments 1', 1", 1"'. The partition walls 14 and 15 serve as means for horizontally limiting the zone of turbulence in the liquid generated by the aeration unit and therefore reduce the mutual influence of the water movements in the compartments, whereby the water in the compartments, where the aeration unit 8 is not present, will calm down sooner and the sludge therein will settle more quickly. In this embodiment having three compartments at all time one compartment can serve as aeration - (nitrification) area, a second compartment as denitrification area and a thrid compartment as settling area.

To supply waste water each compartment 1', 1", 1"' communicates with a supply pipe 2', 2", 2"' respectively, each being adapted to be closed by a slide valve 3. The supply pipe 2', 2", 2"' is open when the aeration unit 8 is in the respective compartment 1', 1" or 1"', and closed if the aeration unit 8 is in one of the other compartments.

To let the aeration unit 8 pass the partition walls 14, 15 they comprise openings 16. It is possible to provide the openings 16 with closing members which are for instance pivotally or slidably connected to the partition walls 14, 15, the closing members closing the openings 16 partially and are only being opened when the aeration unit 8 has to pass through.

Generally the compartments 1', 1" and 1"' communicate with each other, as in at least one of the compartments 1', 1", 1"' waste water is supplied, while purified water is discharged from one of the other compartments 1"' or 1'. To this end the partition walls 14, 15 may for instance be provided with openings near their lower side, through which water and sludge may flow.

For the rest the operation of the installation corresponds to that of the installation of fig. 1.

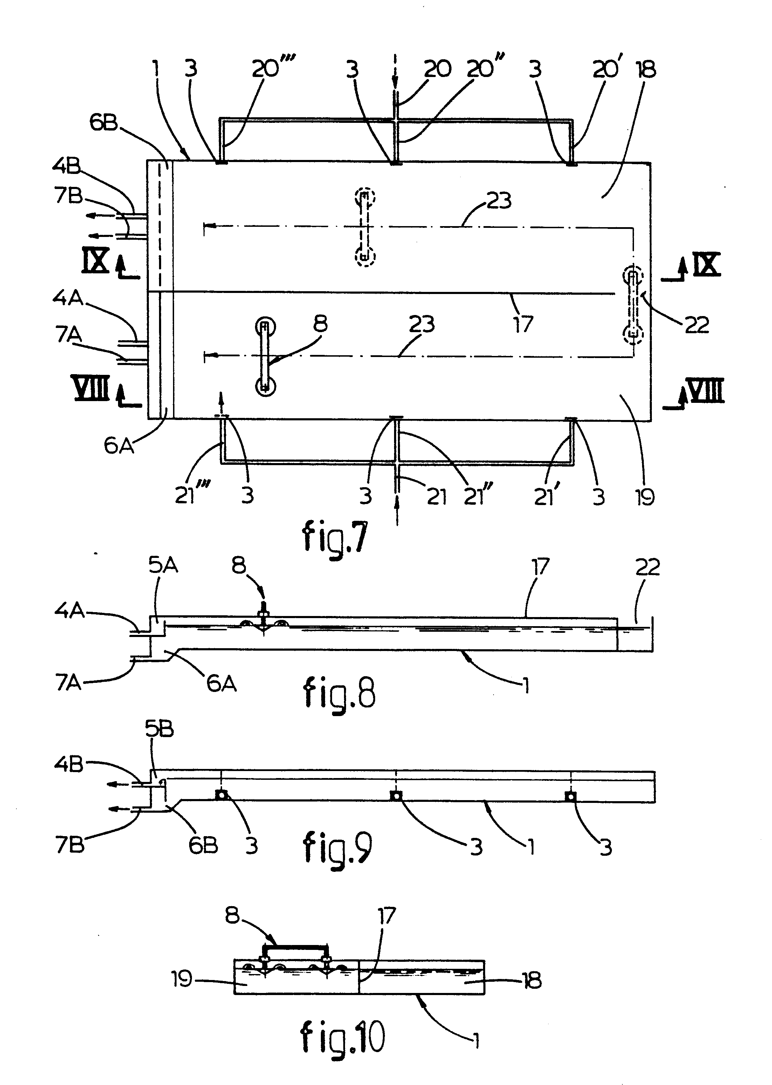

Fig. 7-10 illustrate a third embodiment of the installation for the purification of waste water, wherein the reservoir 1 consists of two compartments 18 and 19 lying side by side and being separated by a partition wall 17. A supply pipe 20 connects to the compartment 18 by means of closeable pipes 20', 20" and 20"', and a supply pipe 21 debouches into the compartment 9 through pipes 21', 21" and 21"'.

The partition wall 17 does not extend over the whole length of the reservoir 1, yet terminates at one end at a distance from the end wall of the reservoir 1, so that at that place an opening 22 is formed, connecting both compartments 18 and 19 to each other.

This opening 22 is also to be used as passage for the aeration unit 8, adapted to be displaced transversely at the end of the reservoir 1 lying near the opening 22 in order to be moved from one compartment to the other.

In this way the aeration unit 8 is at first moved reciprocately along the path 23 indicated with a dotted line in the compartment 18, 19 respectively for one turn, whereupon it is moved to the compartment 19, 18 respectively through the opening 22, where the aeration unit 8 is also conveyed reciprocately for one turn in the longtitudinal direction of the reservoir 1 before it is brought back again to the other compartment 18, 19 respectively, whereafter the cycle is repeated.

When the aeration unit 8 is in the compartment 19, as illustrated in the drawing, the supply pipe 21"' being closest to the aeration unit 8 is open, while the supply pipes 21' and 21" and the overflow means 5A of the discharge 4A in the compartment 19 are in the closed position. In the other compartment 18, however, the overflow means 5B of the discharge 4B is open, while the slide valves 3 close all of the supply pipes 20', 20" and 20"'. The compartment 19 thereby serving as purification area, while the compartment 18 is utilized as settling area. When the aeration unit 8 is in the compartment 18, the functions are just inverted.

Of course, it is also possible, that the compartments 18 and 19 have their own aeration unit 8, which are alternately moved in a reciprocating manner.

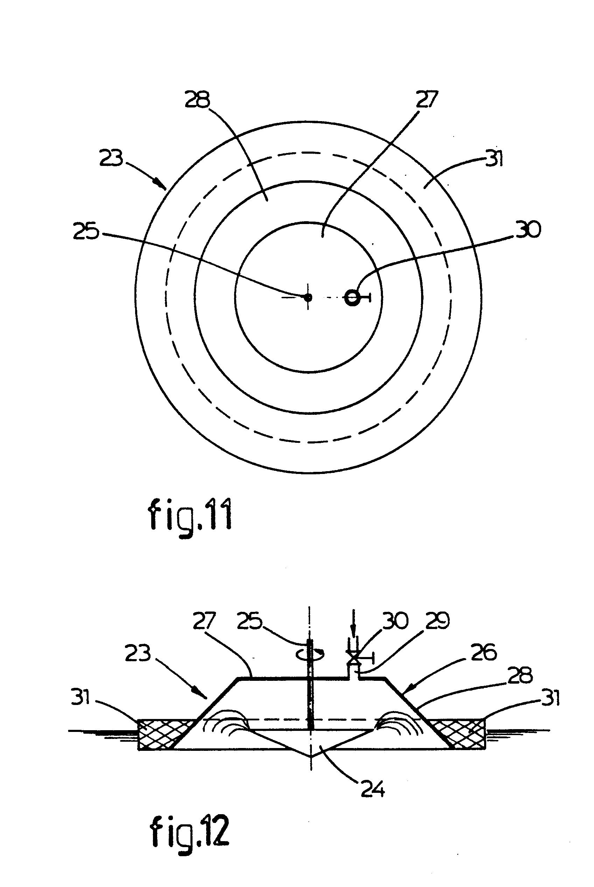

Fig. 11 and 12 show an aeration unit 23 which may be used in or instead of the aeration unit 8 of the installation described hereinbefore. The aeration unit 23 is equipped with a surface aerator 24. This surface aerator 24 is carried by a vertical shaft 25, which is coupled with a driving means (not shown), by which it is brought into rotation during operation.

A cap 26 is disposed over the surface aerator 24, the cap 26 comprising a substantially horizontal top wall 27 having a circular periphery, and a downwardly inclined side wall 28. The side wall 28 of the cap 26 terminates below the water surface during operation. In the cap 26 an air inlet opening 28 is formed, whose cross-section is adjustable by means of a valve 30. A buoyant body 31 surrounding the cap 26 is fixed to the cap 26 at the lower side thereof, the buoyant body 31 providing the aeration unit 23 with buoyancy. Consequently the aeration unit 23 does not require a heavy frame (not shown) for supporting and conveying it.

The cap 26 of the aeration unit 23 not only has the advantages of reducing the nuisance of stench and noise and the formaton of aerosol and increasing the oxygen introduction efficiency but also has the particular advantage in this installation, that the horizontal spreading of the turbulence in the water generated by the surface aerator is limited by the cap 26. As a result the water at a distance of the aeration unit 23 will calm down sooner, which will cause a proper settling of the sludge.

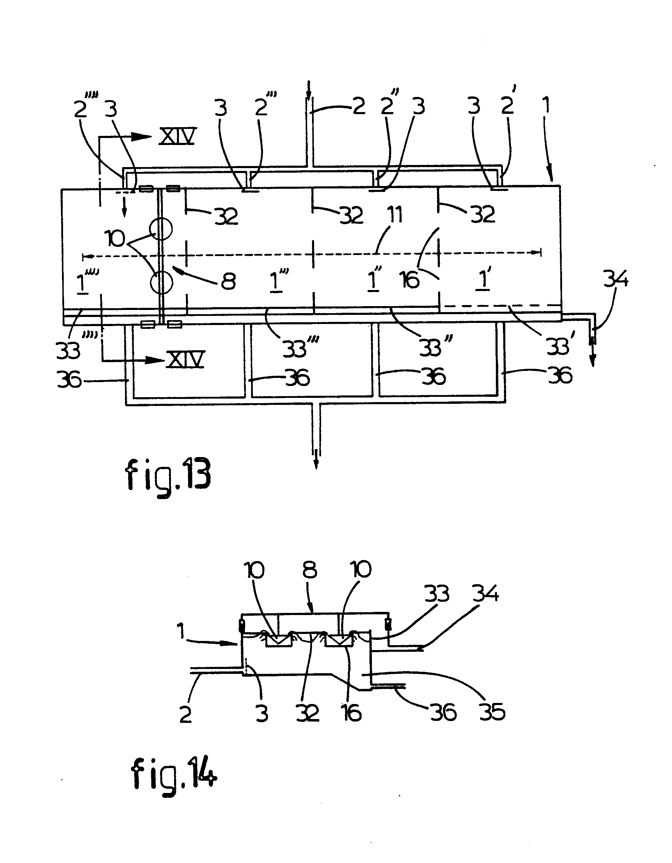

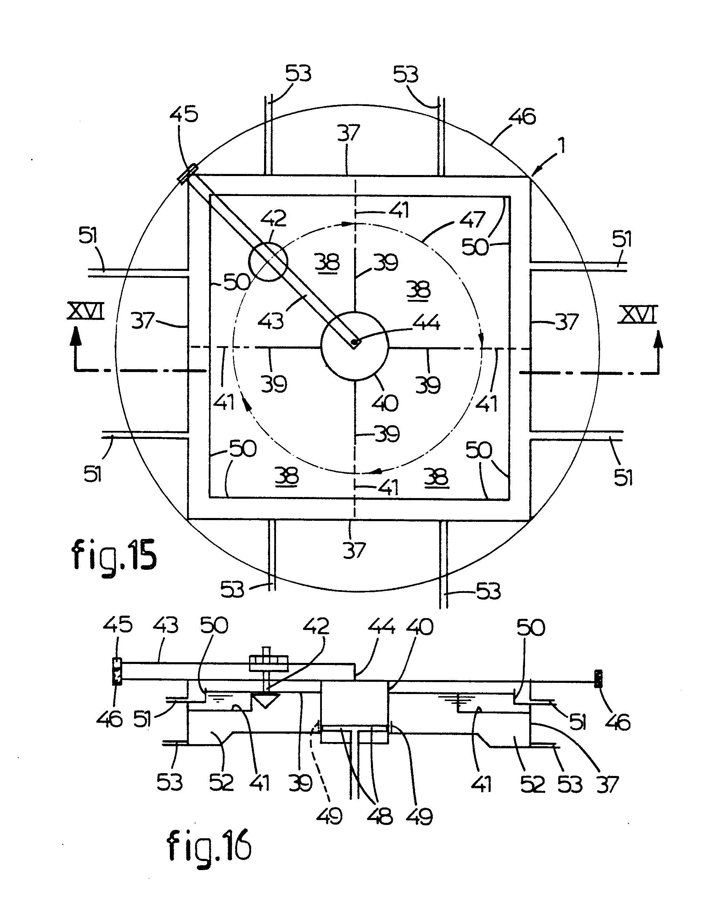

Fig. 13 and 14 show a modification of the installation of fig. 4-6. In this modified embodiment, wherein the reservoir 1 is divided into four compartments 1', 1", 1"' and 1" " of equal dimension by three partition walls 32, each compartment is provided with its own overflow means 33', 33", 33" ', 33" ". Each overflow means is arranged at the longtitudinal side of the reservoir 1 lying opposite to the supply pipe 2', 2", 2"' or 2" " of the respective compartment. The overflow means connect to each other and communicate with a common discharge pipe 34. Further a recess 35 is formed in the bottom of the reservoir 1 at the side of the reservoir 1 where the overflow means 33 are arranged, the recess 35 extending along the whole length of the reservoir 1, and in each compartment 1', 1", 1"', 1" " a sludge discharge 36 for discharging settled excess sludge connects to the recess 35 near the bottom thereof.

Fig. 15 and 16 show a further embodiment of the installation for the purification of waste water, wherein the reservoir 1 has in plan view a quadrangular configuration with four sides 37. This quadrangular reservoir 1 is divided into four equal compartments 38. To this end partition walls 39 extend between the center of each side 37 of the quadrangular rservoir 1 and a central section 40 of the reservoir 1 centrally disposed therein, the partition walls 40 extending at right angles to their respective sides 37.

Each partitional wall 39 comprises an opening 41 at its upper side serving as passage for an aerator 42. This aerator 42 is supported by a horizontal support beam 43, having one end fixed to a vertical shaft 44 disposed in the center of the reservoir 1, and the other end being provided with a bearing roller 45, which is supported and guided by a circular rail 46 extending concentrically around the vertical shaft 44. In this way the support beam is capable of rotating about the vertical shaft 44, whereby the bearing roller 45 rolls over the rail 46 and the aerator 42 runs in a circular path 47 through the several compartments 38.

A supply pipe 48 connects to each compartment 38, the supply pipes debouching from the central section section 40 of the reservoir 1 into the respective compartment 38 and being constructed to be closed by a slide valve 49. Further an overflow means 50 is disposed along the whole circumference of the reservoir 1, the overflow means being separately adjustable at each compartment 38 and a discharge pipe 51 connects to the overflow means 50 at each compartment 38. A recess 52 for collecting excess sludge is arranged along the whole circumference of the reservoir 1, wherein in each compartment a discharge pipe 53 connects to the recess 52. The operation of this installation corresponds to that of the installation of fig. 4-6 and fig. 13, 14.

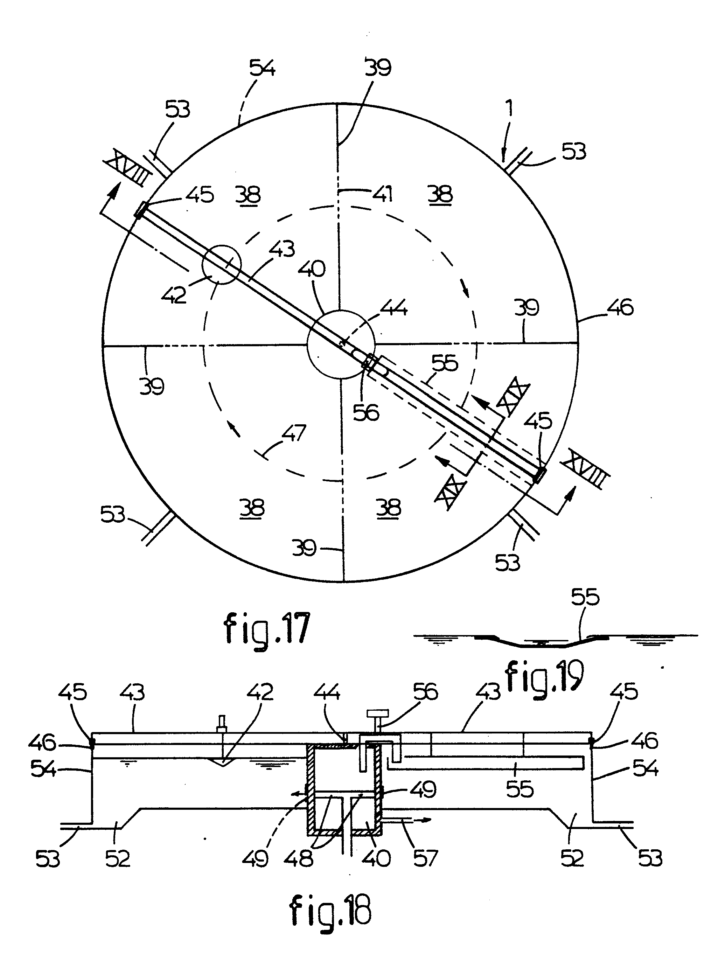

Fig. 17-19 show a modification of the installation of fig. 15 and 16, wherein the reservoir 1 comprises an outer wall 54 having a circular configuration. This outer wall 54 also serves as support and guide for the bearing roller 45 of the support beam 43 for the aerator 42 and to this end the rail 46 is mounted on the outer wall 54.

Furthermore, this modified embodiment of the installation is provided with a displaceable discharge for purified water, the discharge following the displacement of the aerator 42.

For this purpose the support beam 43 extends over the whole diameter of the reservoir 1, so that the vertical shaft 44 engages the center of the support beam 43, and both free ends of the support beam 43 are each provided with the bearing roller 45, which is capable of rolling over the rail 46 on the outer wall 54 of the reservoir 1.

A channel section 55 acting as overflow is mounted underneath the support beam 43 in the portion thereof lying opposite to the aerator with respect to the vertical shaft 44. This channel section extends radially to the reservoir 1 between the central section 40 and the outer wall 54. At the inner side of the channel section 55 a siphon arrangement 56 communicates with the channel section, the siphon arrangement being adapted to siphon water from the channel section 55 into the central section 40 of the reservoir 1, which is constructed as a container. A discharge pipe 57 communicating with the central section 40 discharges the purified water therefrom.

The partition walls 39 in the reservoir 1 are constructed so as to enable the channel section 55 to pass them.

In the way described hereinabove it is made possible to discharge purified cleared water from the compartment 38 which is radially oppositely to the compartment 38 serving at that time as aeration area. Of course it is also possible to provide more than one channel section 55, or to fix the channel section at another position with respect to the aerator 42.

The invention is not restricted to the embodiments shown in the drawing by way of example, which can be varied in several ways within the scope of the invention.

## Claims

1. A method for the purification of liquid, in particular waste water, according to the activated sludge method, wherein liquid to be purified is supplied to a reservoir and purified liquid is discharged from said reservoir, oxygen is added to the liquid in the reservoir by and eration unit, while the liquid is also brought into turbulence, the aeration unit operating continuously while it is moved permanently in a substantially horizontal path through the reservoir, and purified liquid is discharged from the reservoir at a place remote from the aeration unit where the sludge has been settled.

2. A method as claimed in claim 1, wherein the aeration unit is moved in a reciprocating manner.

3. A method as claimed in claim 1, wherein the aeration unit is moved in an endless path.

4. A method as claimed in claim 3, wherein the aeration unit is moved in a circular path.

5. A method as claimed in claim 1, wherein the liquid to be purified is supplied to the reservoir at places, which depend on the position of the aeration unit.

6. A method as claimed in claim 1, wherein there are used at least two compartments being separated by a partition but communicating with one another, and wherein alternately one compartment is aerated, while at least one other compartment is utilized as settling area, where purified liquid is discharged.

7. A method as claimed in claim 6, wherein at least one further compartment is alternately utilized as denitrification area.

8. An installation for the purification of liquid, in particular waste water, according to the actuated sludge method, comprising

-a reservoir for the purification of the liquid;

-a supply for supplying liquid to be purified to the reservoir;

-an aeration unit for aerating the liquid in the reservoir and for bringing this liquid into turbulence, the aeration unit in action, being continuously in operation and moving permanently in a substantially horizontal path;

-means for horizontally limiting the zone of turbulence in the liquid generated by the aeration unit, in such way that always in some part of the reservoir the sludge has been fully settled during operation;

-a discharge means for discharging purified liquid from the reservoir, the discharge means being constructed and arranged such that purified liquid is discharged from the reservoir at a place remote from the aeration unit where the sludge has been settled.

9. An installation as claimed in claim 8, wherein the aeration unit is adapted to move in a reciprocating manner through the reservoir.

10. An installation as claimed in claim 8, wherein the aeration unit is adapted to move in an endless path through the reservoir.

11. An installation as claimed in claim 8, wherein the supply for liquid to be purified comprises a plurality of supply pipes connected to the reservoir and debouching at spaced positions along the path of the aeration unit, the supply pipes being closeable in dependence of the position of the aeration unit.

12. An installation as claimed in claim 8, wherein a plurality of discharge means spaced along the reservoir are provided, the discharge means are constructed to be adjusted in dependence of the position of the aeration unit.

13. An installation as claimed in claim 12, wherein each discharge means comprises an overflow means.

14. An installation as claimed in claim 8, wherein a sludge discharge for excess sludge is arranged in the reservoir.

15. An installation as claimed in claim 14, wherein the sludge discharge communicates with a recess in the bottom of the reservoir.

16. An installation as claimed in claim 8, wherein the means for horizontally limiting the zone of turbulence in the liquid generated by the aeration unit comprise baffle plates crossing the path of the aerating unit, the baffle having a passage for the aeration unit.

17. An installation as claimed in claim 16, wherein the baffle plates are constructed as partition walls dividing the reservoir into a number of compartments communicating with one another.

18. An installation as claimed in claim 17, wherein a supply pipe for liquid to be purified connect to each compartment, and each compartment having a separate discharge means for purified liquid.

19. An installation as claimed in claim 17, wherein the compartments are arranged around a central section of the reservoir, the partition walls extending between the central section and the outer side of the reservoir.

20. An installation as claimed in claim 19, wherein the aeration unit is mounted to a support means, which is rotatable about a vertical shaft disposed in the central section of the reservoir such that the aeration unit moves in a circular path during operation.

21. An installation as claimed in claim 20, wherein the support means has an end remote from the vertical shaft, said end being provided with a bearing roller supported and guided by a rail extending concentrically around the vertical shaft.

22. An installation as claimed in claim 21, wherein the reservoir comprises an outer wall having a circular configuration in plan view and extending concentrically around the vertical shaft, the rail for supporting and guiding the bearing roller of the support means for the aeration unit is mounted on the outer wall of the reservoir.

23. An installation as claime in claim 22, wherein the support means extends beyond the vertical shaft from the aeration unit, the discharge means for purified liquid being attached to the part of the support means lying opposite to the aeration unit in respect of the vertical axis.

24. An installation as claimed in claim 23, wherein the discharge means for purified liquid comprises a channel section acting as an overflow, the channel section extending radially between the central section and the outer wall of the reservoir, a sihpon device communicating with the channel section at an inner end thereof, the siphon device being adapted to siphon liquid from the channel section to the central section of the reservoir which is constructed as a tank and to which a discharge pipe connects.

25. An installation as claimed in claim 8, wherein the aeration unit comprises at least one surface aerator and the means for horizontally limiting the zone of turbulence in the liquid generated by the aeration unit is a rigid cap disposed over the surface aerator, the cap having a downwardly directed circumferential side wall terminating below the liquid surface during operation, at least one gas inlet opening being arranged in the cap.

26. An installation as claimed in claim 8, whrein the aeration unit comprises at least one buoyant body.

27. An installation as claimed in claim 8, wherein the aeration unit comprises at least one pair of aerators generating opposite flows.

fig.1

fig.2

fig.3

fig.4

fig.5

fig.6

fig.7

fig.8

fig.9

fig.10

fig.11

fig.12

fig.13

fig.14

fig.15

fig.16

fig.17

fig.19

fig.18

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-3 965 009 (J.R. KAELIN)<br><br>* Column 2, line 41 - column 3, line 42; column 4, lines 40-61 * | 1-6,8,<br>10,14,<br>18,20,<br>22,26 | C 02 F 3/12<br>C 02 F 3/30<br>C 02 F 3/16 |
| D,Y | US-A-3 320 160 (WELLES PRODUCTS)<br><br>* Column 2, line 16 - column 3, line 28; column 6, lines 31-45; column 7, lines 5-21 * | 1-6,8,<br>10,14,<br>18,20,<br>22,26 | |
| Y | DE-A-1 708 604 (PASSAVANT)<br><br>* Page 8, line 9 - page 9; page 11, line 15 - page 12, paragraph 2 * | 1-6,8,<br>12,14,<br>18,20,<br>22,26 | TECHNICAL FIELDS SEARCHED (Int. Cl.4)<br><br>C 02 F |
| A | FR-A-2 311 758 (N.V. SEGHERS ENGINEERING)<br><br>* Page 7, line 29 - page 9, line 12 * | 1,3,4,<br>6,8,10<br>,13-17<br>,19,20 | |

---        -/-

The present search report has been drawn up for all claims

| Place of search | Date of completion of the search | Examiner |
|---|---|---|
| THE HAGUE | 18-12-1986 | TEPLY J. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | DE-A-2 909 168  (A. SCHREIBER)<br><br>* Page 1, claims 1-10 * | 1,3,4,<br>6-8,10<br>,16,20<br>-22 | |
| A | CH-A-  544 040  (NORM)<br><br>* Column  2, line 65 - column 4, line 6; column 2, lines 38-59 * | 1,5,6,<br>8,13,<br>14,16,<br>17 | |
| A | NL-A-7 611 701  (DHV)<br>* Page 5, claims 1,2 * | 25 | |

TECHNICAL FIELDS
SEARCHED (Int. Cl.4)

The present search report has been drawn up for all claims

| Place of search | Date of completion of the search | Examiner |
|---|---|---|
| THE HAGUE | 18-12-1986 | TEPLY J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82